# EUROPEAN PATENT APPLICATION

(11) **EP 1 942 593 A2**
(43) Date of publication of application: **09.07.2008**
(21) Application number: 08100012.7
(22) Date of filing: 02.01.2008
(51) Int. Cl.: H04H 60/72

(54) **Apparatus and method for providing digital broadcasting information in portable communication system**

(30) Priority: 03.01.2007 KR 20070000514
(71) Applicant: Samsung Electronics Co., Ltd., Suwon-si, Gyeonggi-Do (KR)
(72) Inventor: Kim, Ja-Kyung, Gyeonggi-do (KR)
(74) Representative: Grünecker, Kinkeldey, Stockmair & Schwanhäusser Anwaltssozietät

(57) **Abstract**

Provided is an apparatus and method for providing digital broadcasting information in a portable communication system. The apparatus includes a digital broadcasting management unit and a controller. The digital broadcasting management unit identifies program change information and identifies a program change time that is a time at which the program change information is output. The controller controls the digital broadcasting output, controls the digital broadcasting management unit to identify the program change time, and outputs the program change information.

## Description

The present invention relates generally to a portable communication system for receiving Digital Multimedia Broadcasting (DMB), and in particular, to an apparatus and method for identifying information on digital broadcasting initiated at other channels at the time of viewing digital broadcasting using a portable communication system.

In recent years, a portable communication system, a necessity to modern people, has become increasingly popular. A service provider or a terminal manufacturer is competitively developing a service or a product for the differentiation from other ones.

For example, the portable communication system is evolving into a multimedia equipment for a phone book, games, Short Message Service, electronic mail (e-mail), a morning wake-up call, an MPEG Layer 3 (MP3) player, a digital camera, and a wireless Internet service, and the portable communication system is providing diverse services.

The recent development of digital multimedia technology leads to an increasing use of digital multimedia information and thus, results in an advent of a portable communication system supporting a function of receiving a video service (e.g., a terrestrial DMB, a satellite DMB, etc.). The portable communication system attracts much attention from users, because the portable communication system can provide the video service while the users move from one location to another location.

A user must perform a procedure of changing a channel to identify a currently broadcast program through other channels while viewing digital broadcasting using the portable communication system.

Such a channel change method is implemented with the end of a channel in service and therefore, causes a drawback of requiring the user to spend much time identifying a currently broadcast program.

In order to provide a solution to the drawback, the portable communication system provides information on a program broadcast title, a broadcast time, a broadcast channel, etc. to the user through an Electronic Program Guide (EPG) service.

However, a drawback is that the EPG service requires a process of updating EPG information and provides only information on a program broadcasted in time.

Thus, there is a demand for an apparatus and method for providing information on a program initiated at other channels in a portable communication system supporting digital broadcasting reception.

The present invention has been designed to substantially solve at least the above problems and/or disadvantages and to provide at least the advantages below. Accordingly, the object of the present invention is to provide an apparatus and method for providing program change information by channels in a portable communication system for receiving digital broadcasting.

This object is solved by the subject matter of the independent claims.

Preferred embodiments are defined in the dependent claims.

Another aspect of the present invention is to provide an apparatus and method for acquiring program change information using information on an Electronic Program Guide (EPG) while viewing digital broadcasting in a portable communication system that receives digital broadcasting.

A further aspect of the present invention is to provide an apparatus and method for, upon receiving a request for a channel change depending on program change information, changing a channel of a digital broadcasting in response to the request in a portable communication system for receiving digital broadcasting.

The above aspects are achieved by providing an apparatus and method for providing digital broadcasting information in a portable communication system.

According to one aspect of the present invention, there is provided an apparatus for providing digital broadcasting information. The apparatus includes a digital broadcasting management unit and a controller. The digital broadcasting management unit identifies program change information, which is information on a program initiated within a predetermined time during a digital broadcasting output, and identifies a program change time that is a time at which the program change information is output. The controller controls the digital broadcasting output, controls the digital broadcasting management unit to identify the program change time, and outputs the program change information when the digital broadcasting management unit identifies the program change time.

According to another aspect of the present invention, there is provided a method for providing digital broadcasting information in a portable communication system. The method includes identifying program change information that is information on a program initiated within a predetermined time during a digital broadcasting output; identifying a program change time that is a predetermined time before the program is initiated, by identifying the program change information; and outputting the program change information at the identified program change time.

The above object and other aspects, features and advantages of the present invention will become more apparent from the following detailed description when taken in conjunction with the accompanying drawings in which:
FIG. 1 is a block diagram illustrating architecture of a portable communication system for providing information on program change time point in the course of viewing digital broadcasting according to the present invention;
FIG. 2 is a flowchart illustrating a procedure of providing program change information while viewing digital broadcasting in a portable communication system according to the present invention; and
FIG. 3 is a flowchart illustrating a procedure of identifying program change information in a portable communication system according to the present invention.

Preferred embodiments of the present invention will be described herein below with reference to the accompanying drawings. In the following description, well-known functions or constructions are not described in detail since they would obscure the invention in unnecessary detail. Below terms, which are defined considering functions in the present invention, can be different depending on user and operator's intention or practice. Therefore, the terms should be defined on the basis of the disclosure throughout this specification.

The following description will be made for an apparatus and method for identifying information for informing a user of a program change in the course of viewing digital broadcasting in a portable communication system for receiving digital broadcasting.

The information for informing the program change refers to information on a new program initiated after a digital broadcasting program is terminated. The information can include information on a program televising time (broadcasting start and end times), a program broadcast name, and a program broadcast channel.

The digital broadcasting means Digital Multimedia Broadcasting (DMB), Digital Video Broadcasting (DVB), Digital Audio Broadcasting (DAB), and Media Forward Link Only (MediaFLO).

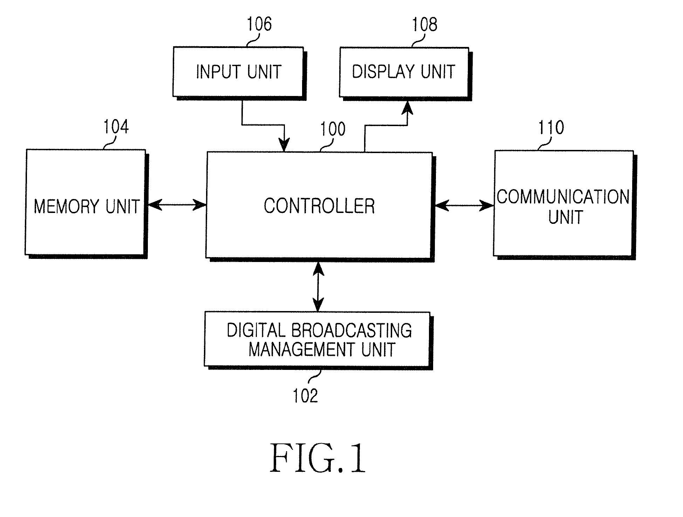

FIG. 1 is a block diagram illustrating architecture of a portable communication system for providing information on a program change time point in the course of viewing digital broadcasting according to the present invention.

In the following description, the portable communication system signifies the inclusion of all mobile communication terminals such as a cellular phone, a Personal Communication System (PCS) phone, a Personal Digital Assistant (PDA), an International Mobile Telecommunications-2000 (IMT-2000) phone, and a 4th-Generation (4G) broadband system and a device supporting a receipt of digital broadcasting. The following description will be made with a general construction of the examples.

Referring to FIG. 1, the portable communication system can include a controller 100, a digital broadcasting management unit 102, a memory unit 104, an input unit 106, a display unit 108, and a communication unit 110.

The controller 100 controls a general operation of the portable communication system. For example, the controller 100 performs a process and a control for voice telephony and data communication. In addition to a general function, the controller 100 searches the memory unit 104 for program change information in the course of viewing digital broadcasting and outputs the searched program change information to the display unit 108 according to the present invention.

Upon receipt of a request for channel change from user, the controller 100 performs the channel change in response to the request after outputting the program change information.

The controller 100 controls the digital broadcasting management unit 102 to receive an EPG, identify a start time of a program provided at each channel and a broadcast name, and identify program change information.

The digital broadcasting management unit 102 manages a digital broadcasting operation of the portable communication system under the control of the controller 100. In detail, under the control of the controller 100, the controller 100 controls an output of the digital broadcasting, identifies program change information previously stored in the memory unit 104, and determines a program change time according to the present invention.

Under the control of the controller 100, the digital broadcasting management unit 102 receives the EPG and acquires the program change information using the received EPG.

The memory unit 104 is comprised of a Read Only Memory (ROM), a Random Access Memory (RAM), and a flash ROM. The ROM stores a micro code of a program for processing and controlling the controller 100 and the digital broadcasting management unit 102 and various kinds of reference data.

The RAM, a working memory of the controller 100, stores temporary data generated in execution of all program. The flash ROM stores each variety of updateable safekeeping data such as a phone book, an incoming message, and an outgoing message. The flash ROM stores program change information acquired by the digital broadcasting management unit 102 according to the present invention.

The input unit 106 includes numeral key buttons '0' to '9', a menu button, a cancel (delete) button, an okay button, a talk button, an end button, an Internet button, navigation key (or direction key) buttons, and a plurality of function keys such as a character input key. The input unit 106 provides key input data (e.g., a request to change a digital broadcasting channel), associated with a key pressed by a user, to the controller 100.

The display unit 108 displays status information generated during operation of the portable communication system, the limited number of characters, and a large amount of moving pictures and still pictures. The display unit 108 can use a color Liquid Crystal Display (LCD).

The communication unit 110 exchanges a radio signal of data input/output through an antenna (not shown). For example, in a transmission mode, the communication unit 110 processes data to be transmitted by channel coding and spreading, processes the data into a Radio Frequency (RF) signal, and transmits the RF-processed data. In a reception mode, the communication unit 110 converts a received RF signal into a baseband signal, processes the baseband signal by de-spreading and channel decoding, and restores the processed signal to its original data form.

The controller 100 can perform a function of the digital broadcasting management unit 102. However, these are separately constructed and shown in order to distinguish and describe their respective functions in the present invention. Thus, when a product is actually realized, it can be also constructed for the controller 100 to process all of them.

The above description has been made for an apparatus for providing program change information in the course of viewing digital broadcasting. The following description will be described for a method for providing program change information using the apparatus according to an exemplary embodiment of the present invention.

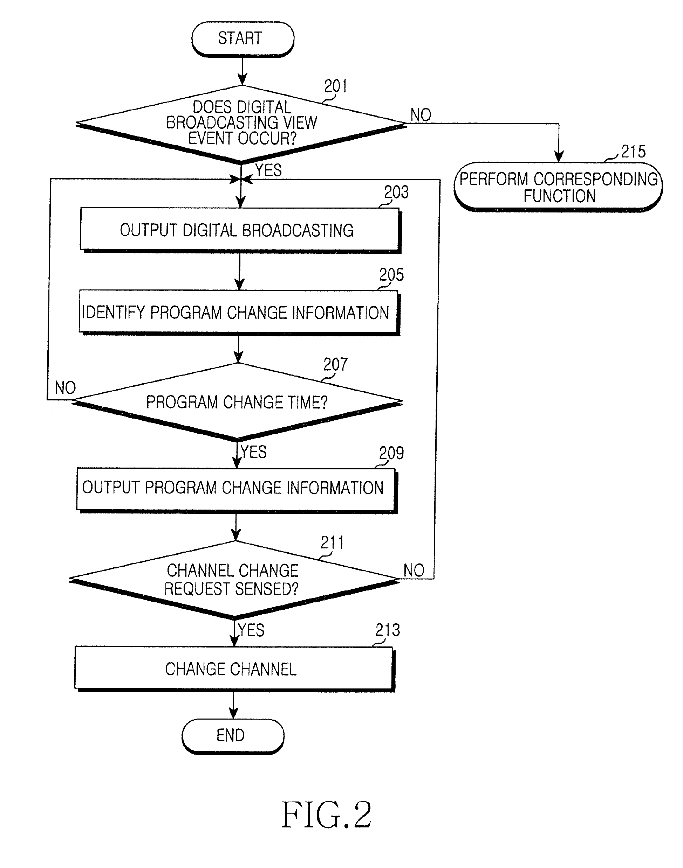

FIG. 2 is a flowchart illustrating a procedure of providing program change information while viewing digital broadcasting in the portable communication system according to the present invention.

Referring to FIG. 2, in Step 201, the controller 100 of the portable communication system checks whether a user initiates a digital broadcasting view event. If the digital broadcasting view event does not occur, in Step 215, the controller 100 performs a corresponding function (e.g., transitioning to an idle mode).

If the digital broadcasting view event occurs, in Step 203, the controller 100 outputs digital broadcasting received through the communication unit 110 to the display unit 108.

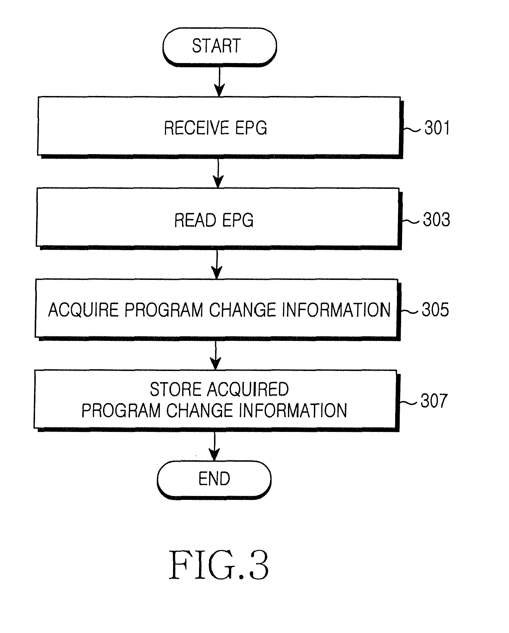

In Step 205, the controller 100 controls the digital broadcasting management unit 102 to identify program change information. The program change information refers to information on a new program initiated after a digital broadcasting program is terminated. A method for identifying the program change information, by the digital broadcasting management unit 102 under the control of the controller 100, will be described in detail with reference to FIG. 3 below.

In Step 207, the controller 100 controls the digital broadcasting management unit 102 to identify a program change time using the program change information identified in the Step 205. The program change time refers to a time at which the program change information (e.g., a predetermined time before the program is initiated) is output. The program change time can vary depending on a user's selection (e.g., one minute before a program is initiated) as well.

If a program change time is not identified by the digital broadcasting management unit 102, the controller 100 repeatedly performs the Step 203.

If a program change time is identified by the digital broadcasting management unit 102, in Step 209, the controller 100 outputs the program change information to the display unit 108.

For example, when the digital broadcasting management unit 102 determines that news is initiated at a channel 42 after a predetermined period of time, the controller 100 can display a message informing the user that news is initiated at a channel 42 on a lower part of the display unit 108.

The controller 100 can flicker the displayed message when not receiving a user request for a channel change for a predetermined period of time.

In Step 211, the controller 100 checks whether it senses a user's request for a channel change. The channel change request can be identified by sensing a press of a specific key for changing a digital broadcasting channel.

If the controller 100 does not sense a channel change request, the controller 100 repeatedly performs Step 203.

If the controller 100 senses the digital broadcasting channel change request, in Step 213, the controller 100 changes a channel in response to the user's request.

After Step 213 is completed, the controller 100 terminates the present algorithm.

FIG. 3 is a flowchart illustrating a procedure of identifying program change information in the portable communication system according to the present invention.

Referring to FIG. 3, in Step 301, the controller 100 of the portable communication system receives an EPG via the communication unit 110.

In Step 303, the controller 100 controls the digital broadcasting management unit 102 to read the received EPG. In Step 305, the controller 100 controls the digital broadcasting management unit 102 to acquire program change information.

The program change information refers to information on a new program initiated after a digital broadcasting program is terminated. Under the control of the controller 100, the digital broadcasting management unit 102 first identifies a current time, identifies an EPG, and identifies and acquires information on a new program initiated from the identified current time.

In Step 307, the controller 100 stores the acquired program change information in the memory unit 104 and terminates the present algorithm.

As described above, the present invention can identify program change information using a portable communication system and thus, can omit a process of terminating in-service digital broadcasting while identifying information on a program broadcast on other channels while viewing the digital broadcasting.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for providing digital broadcasting information, the apparatus comprising:
a digital broadcasting management unit for identifying program change information, which is information on a program initiated within a predetermined time during a digital broadcasting output, and identifying a program change time that is a time at which the program change information is output; and
a controller for controlling the digital broadcasting output, controlling the digital broadcasting management unit to identify the program change time, and outputting the program change information at the program change time.

2. The apparatus of claim 1, wherein when sensing a request for a channel change by a user, the controller changes a channel in response to the request after outputting the program change information.

3. The apparatus of claim 2, wherein under the control of the controller, the digital broadcasting management unit identifies a received Electronic Program Guide, EPG, including the program change information.

4. The apparatus of one of claims 1 to 3, wherein the program change time can be set as a predetermined time before the program is initiated.

5. The apparatus of one of claims 1 to 4, wherein the program change information further comprises at least any one of information on a program televising time, a program broadcast name, and a program broadcast channel.

6. The apparatus of one of claims 1 to 5, wherein a digital broadcasting comprises at least one of a Digital Multimedia Broadcasting, DMB, a Digital Video Broadcasting, DVB, a Digital Audio Broadcasting, DAB, and a Media Forward Link Only, MediaFLO, broadcasting.

7. A method for providing digital broadcasting information in a portable communication system, the method comprising:
identifying program change information that is information on a program initiated within a predetermined time during a digital broadcasting output;
identifying a program change time by identifying the program change information; and
outputting the program change information at the identified program change time.

8. The method of claim 7, further comprising:
sensing a request for a channel change by a user after outputting the program change information at the identified program change time; and
changing a channel in response to the request when sensing the channel change request.

9. The method of claim 7 or 8, wherein the program change information is acquired by identifying information on a program initiated within a predetermined time starting from a current time in a received Electronic Program Guide, EPG.

10. The method of one of claims 7 to 9, wherein the program change information further comprises at least any one of information on a program televising time, a program broadcast name, and a program broadcast channel.

11. The method of one of claims 7 to 10, wherein the program change time can be set as a predetermined time before the program is initiated.

12. The method of one of claims 7 to 11, wherein the digital broadcasting comprises at least one of a Digital Multimedia Broadcasting, DMB, a Digital Video Broadcasting, DVB, a Digital Audio Broadcasting, DAB, and a Media Forward Link Only, MediaFLO, broadcasting.

13. A method for providing digital broadcasting information in a portable communication system, the method comprising:
identifying a program change time by identifying program change information that is information on a program initiated within a predetermined time during a digital broadcasting output; and
outputting the program change information at the identified program change time.

14. The method of claim 13, further comprising:
changing a channel in response to a channel change request.

15. The method of claim 13 or 14, wherein the program change information is acquired from a received Electronic Program Guide, EPG.

16. The method of one of claims 13 to 15, wherein the program change information further comprise at least one of information on a program televising time, a program broadcast name, and a program broadcast channel.

17. The method of one of claims 13 to 16, wherein the program change time can be set as a predetermined time before the program is initiated.

18. An apparatus for providing digital broadcasting information in a portable communication system, the apparatus comprising:
means for identifying a program change time by identifying program change information that is information on a program initiated within a predetermined time during a digital broadcasting output; and
means for outputting the program change information at the identified program change time.

19. The apparatus of claim 18, further comprising:
means for changing a channel in response to a channel change request.

20. The apparatus of claim 18 or 19, wherein the program change information is acquired from a received Electronic Program Guide, EPG.
